(19) Europäisches Patentamt
European Patent Office
Office européen des brevets

(11) Publication number: 0 181 494
A1

(12) **EUROPEAN PATENT APPLICATION**

(21) Application number: 85112750.6

(51) Int. Cl.⁴: A 01 N 37/44

(22) Date of filing: 08.10.85

(30) Priority: 11.10.84 JP 212824/84
11.10.84 JP 212825/84
11.10.84 JP 212826/84
23.08.85 JP 185249/85
23.08.85 JP 185250/85

(43) Date of publication of application:
21.05.86 Bulletin 86/21

(84) Designated Contracting States:
DE FR GB

(71) Applicant: MITSUBISHI GAS CHEMICAL COMPANY, INC.
5-2, Marunouchi 2-chome Chiyoda-Ku
Tokyo(JP)

(72) Inventor: Suzuki, Akinori
1-105, Sonoo-Jutaku 1320 Sonoo-cho
Chiba-shi Chiba-ken(JP)

(72) Inventor: Hyeon, Suong Be
4-1-23-5-205, Harigaya
Urawa-shi Saitama-ken(JP)

(72) Inventor: Nagai, Ichiro
2-40-11, Fujimidai
Kunitachi-shi Tokyo(JP)

(72) Inventor: Iesaka, Hiroyuki
2-11-18, Nakane Meguro-ku
Tokyo(JP)

(72) Inventor: Kajita, Toshio
13-13-9, Yachiyodaikita
Yachiyo-shi Chiba-ken(JP)

(72) Inventor: Furushima, Masakazu
134-165, Kita
Nagareyama-shi Chiba-ken(JP)

(74) Representative: Popp, Eugen, Dr. et al,
MEISSNER, BOLTE & PARTNER Postfach 86 06 24
D-8000 München 86(DE)

(54) **Plant growth regulation agent.**

(57) A plant growth regulation agent for increasing grilds and improving the quality of various plants. This agent comprises, as an effective component, at least one compound selected from the group consisting of compounds represented by general formulas:

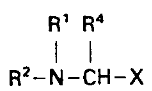

...(A)

and

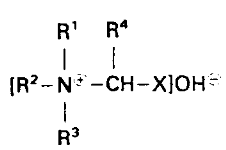

...(B)

(wherein each of $R^1$, $R^2$ and $R^3$ is H, alkyl or alkenyl group containing 1 to 4 carbon atoms or benzyl group; $R^4$ is H, $CH_3$, $C_2H_5$, $CH_2=CH$, or $CH_3CH=CH$; and X is CN, COOH, $COOCH_3$, $COOC_2H_5$ or $CONH_2$; $R^1$, $R^2$ and $R^4$ in general formula (A) not being simultaneously hydrogen atoms) and salts thereof, and $R^1$, $R^2$ and R3 in general formula (B) not being hydrogen atoms.

EP 0 181 494 A1

Plant growth regulation agent

The present invention relates to a plant growth regulation agent for increasing yields and improving the quality of plants such as rice, wheat, potato, bean, vegetable, and corn plants, as well as fodder grasses and fruit trees.

O-phenylhydroxylamine is known as a growth regulation agent for bean plants such as soybean plants (Japanese Patent Publication No. 58-134001). Choline chloride is known as a growth regulation agent for potato plants such as sweet potatoes. When seedlings of sweet potatoes are immersed in a dilute aqueous solution of choline chloride, the rooting rate is considerably increased.

In order to suppress the stem length of wheat plants, CCC (2-chloroethyl trimethylammonium chloride), BCB (2-bromoethyl trimethylammonium bromide), and the like are widely used as wheat growth regulation agents.

Hydroxyisoxazole is known as a rice growth regulation agent and can increase rice yield.

It is an object of the present invention to provide a plant growth regulation agent which can facilitate photosynthesis of all plants such as cereals, vegetables, and fruit trees and increase their yields.

In order to achieve the above object of the present invention, there is provided a plant growth regulation

agent characterized by comprising, as an effective component, at least one compound selected from the group consisting of compounds represented by general formulas:

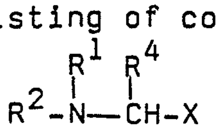 ...(A)

and

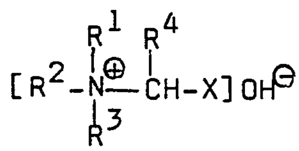 ...(B)

(wherein each of $R^1$, $R^2$ and $R^3$ is H, alkyl or alkenyl group containing 1 to 4 carbon atoms or benzyl group; $R^4$ is H, $CH_3$, $C_2H_5$, $CH_2=CH$, or $CH_3CH=CH$; and X is CN, COOH, $COOCH_3$, $COOC_2H_5$ or $CONH_2$; $R^1$, $R^2$ and $R^4$ in general formula (A) not being simultaneously hydrogen atoms) and salts thereof, and $R^1$, $R^2$ and $R^3$ in general formula (B) not being hydrogen atoms.

Examples of the compounds represented by general formulas (A) and (B) as an effective component of the present invention may include those in Tables I and II, respectively, presented below:

For 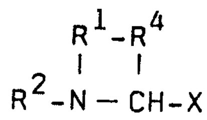

Table I

| Compound No. | $R^1$ | $R^2$ | $R^4$ | X | Properties |
|---|---|---|---|---|---|
| 1 | $CH_2=CHCH_2$ | H | H | CN | bp 77-78°C (18mmHg) |
| 2 | $CH_2=CHCH_2$ | H | H | $COOC_2H_5$ | bp 77-78.5°C (19mmHg) |
| 3 | $CH_2=CHCH_2$ | H | H | COONa | - |
| 4 | $CH_2=CHCH_2$ | H | H | COOK | dp 223°C |
| 5 | $CH_2=CHCH_2$ | H | H | COOH | mp 167-168°C |
| 6 | $CH_2=CHCH_2$ | H | $CH_3$ | CN | bp 68-69°C (12mmHg) |
| 7 | $CH_2=CHCH_2$ | H | $CH_3$ | $COOC_2H_5$ | bp 72.5-75.0°C (15mmHg) |
| 8 | $CH_2=CHCH_2$ | H | $CH_3$ | COOK | dp 188°C |
| 9 | $CH_2=CHCH_2$ | H | $CH_3$ | $CONH_2$ | mp 98.5-99.5°C |
| 10 | $C_2H_5$ | H | H | CN | bp 62.5°C (16mmHg) |
| 11 | $CH_3CH=CHCH_2$ | H | H | $COOC_2H_5$ | bp 62-65.5°C (5.5mmHg) |
| 12 | $CH_3CH=CHCH_2$ | H | H | CN | bp 94-95°C (19mmHg) |
| 13 | H | H | $CH_2=CH$ | COOH | dp 167°C |

(to be continued)

0181494

| Compound No. | $R^1$ | $R^2$ | $R^4$ | X | Properties |
|---|---|---|---|---|---|
| 14 | H | H | $CH_3CH=CH$ | COOH | dp 220°C |
| 15 | $CH_3$ | $CH_3$ | H | COOH | Hydrochloride, mp 190-192°C |
| 16 | $CH_2=CHCH_2$ | $C_2H_5$ | H | $COOC_2H_5$ | Oily Product |
| 17 | $CH_2=CHCH_2$ | $C_2H_5$ | H | COOK | mp 30-31°C |
| 18 | $CH_2=CHCH_2$ | $CH_3$ | H | COOK | mp 46-48°C |
| 19 | $CH_2=C(CH_3)CH_2$ | $C_2H_5$ | H | COOK | Oily Product |
| 20 | $CH_2=C(CH_3)CH_2$ | $CH_2=C(CH_3)CH_2$ | H | COOK | mp 281-283°C |
| 21 | $CH_2=CHCH_2$ | $CH_2=CHCH_2$ | H | COOK | dp 221°C |
| 22 | $CH_2=CHCH_2$ | H | $C_2H_5$ | COOH | dp 221°C |
| 23 | $CH_2=CHCH_2$ | H | H | $CONH_2$ | mp 44.5-45.0°C |
| 24 | $CH_2=CHCH_2$ | H | H | COOH | mp 133-135°C |
| 25 | $N-C_3H_7$ | H | H | CN | BP 75.0-75.5°C (14.0mmHg) |
| 26 | $C_6H_5CH_2$ | H | H | CN | BP 63.0-64.0°C (1mmHg) |
| 27 | $C_6H_5CH_2$ | H | H | COOK | dp 233.0°C |
| 28 | $CH_3CH=CHCH_2$ | H | H | $CONH_2$ | m.p 38.0-38.5°C |

| Compound No. | $R^1$ | $R^2$ | $R^4$ | X | Properties |
|---|---|---|---|---|---|
| 29 | $N-C_3H_7$ | H | H | $CONH_2$ | BP 59.0°C (2mmHg) |
| 30 | $C_6H_5CH_2$ | H | H | $CONH_2$ | mp 92.5-93.5°C |
| 31 | $N-C_2H_7$ | H | H | $COOC_2H_5$ | BP 75.0-76.0°C (12.5mmHg) |
| 32 | $C_6H_5CH_2$ | H | H | $COOC_2H_5$ | BP 152.0-153.5°C (16mmHg) |
| 33 | $CH_3CH=CHCH_2$ | H | H | COOK | dp 235.0°C |
| 34 | $N-C_3H_7$ | H | H | COOH | mp 184.0-186°C |
| 35 | $CH_2=CHCH_2$ | $CH_3$ | H | $COOC_2H_5$ | Oily Product $N_D^{24.6°C}$ 1.43540 |
| 36 | $CH_2=C(CH_3)CH_2$ | $C_2H_5$ | H | $COOC_2H_5$ | " $N_D^{25.4°C}$ 1.44540 |
| 37 | $CH_2=C(CH_3)CH_2$ | $CH_2=C(CH_3)CH_2$ | H | $COOC_2H_5$ | " $N_D^{25.4°C}$ 1.44682 |

For 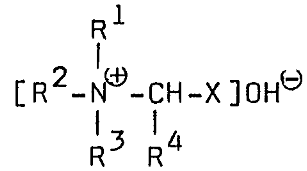

Table II

| Compound No. | $R^1$ | $R^2$ | $R^3$ | $R^4$ | X | Properties |
|---|---|---|---|---|---|---|
| 38 | $CH_2=CHCH_2$ | $CH_3$ | $CH_3$ | H | $COOC_2H_5$ | Oily Product (Hydrobromide) |
| 39 | $CH_2=CHCH_2$ | $CH_3$ | $CH_3$ | H | COOH | Oily Product (Internal Salt) |
| 40 | $CH_3$ | $CH_3$ | $CH_3$ | H | COOH | (Hydrochloride) mp 227-228°C |
| 41 | $CH_2=CHCH_2$ | $CH_2=CHCH_2$ | $CH_2=CHCH_2$ | H | $COOC_2H_5$ | (Hydrobromide) mp 80-83°C |
| 42 | $CH_2=CHCH_2$ | $CH_2=CHCH_2$ | $CH_2=CHCH_2$ | H | COOH | Oily Product |
| 43 | $C_2H_5$ | $C_2H_5$ | $C_2H_5$ | H | $COOC_2H_5$ | (Hydrobromide) mp 35-36°C |
| 44 | $C_2H_5$ | $C_2H_5$ | $C_2H_5$ | H | COOH | Oily Product |

Among the compounds enumerated above, allyl-substituted glycine and the like are preferable. N-allylglycine is particularly preferable. N-allylglycine, salts thereof, and esters thereof with lower alcohols include:

N-allylglycine,
N-allylglycine hydrochloride,
N-allylglycine sodium salt,
N-allylglycine potassium salt,
N-allylglycine choline salt, and
N-allylglycine ethyl ester.

These compounds themselves are known and can be prepared by conventional methods. Some examples of methods of preparing these compounds are exemplified below.

<u>Manufacturing Example 1</u>

Preparation of N-allylglycine ethyl ester

A mechanical stirrer, a cooling tube, a dripping funnel, and a thermocouple were mounted on a 2 ℓ three-necked flask. Sufficiently dehydrated ether was charged in the flask in an amount of 700 mℓ, and was cooled with ice. The system was kept in a nitrogen atmosphere. When the system was sufficiently cooled, allylamine was added in an amount of 166 g (2.9 moles) and stirring was continued for a while. Bromoacetate ethyl ester was added dripwise through the dripping funnel in an amount of 230 g (1.4 moles). Care must be taken not to add this ester too quickly since such addition causes vigorous refluxing of the ether. In the course of dripping, a white slurry was produced. After dripping was completed, the contents were stirred for 3 hours while the temperature was kept constant. After the reaction, the slurry was filtered to remove the solvent and reduced pressure evaporation was performed to provide 15 g (yield of 80%) of N-allylglycine ethyl ester. The obtained ester had a boiling point of 79 to 80°C (14 to 15 mmHg).

IR: $\nu_{max}^{film}$ 3360(-NH-) $1740(-\overset{C}{\overset{|}{C}}-O-)$ $1650(-CH=CH_2)cm^{-1}$

RMR: $\delta_{TMS}^{CDC\ell_3}$ 1.28(3H, t) 1.83(1H, S) 3,28(2H, d)
3.36(2H, S) 4.19(2H, q) 5.11(1H, d)
5.13(1H, d) 5.74-6.18(1H, m)

<u>Manufacturing Example 2</u>

Preparation of N-allylglycine potassium salt

After a 3 ℓ separable flask was charged with 500 mℓ of ethanol, 62 g (1.15 moles) of potassium hydroxide were added and were completely dissolved. After dissolving KOH, 165 g (1.15 moles) of the N-allylglycine ethyl ester were dripped through a dripping funnel at room temperature. A white slurry was produced during dripping. After dripping was completed, refluxing was performed for 1 hour to completely dissolve the slurry. The contents were left to stand overnight. Since white solids had precipitated, the solids were filtered by suction and the resultant crystals were washed with ethanol and dried by reduced pressure to provide 150 g of white crystals. The yield was 80%. The product had a melting point of 223°C.

Calc.: C=39.19%, H=5.26%, N=9.14%
Found: C=39.0%, H=5.4%, N=9.4%

IR: $\nu_{max}^{nujul}$ 3325(-NH-) $1650(-CH=CH_2)$ $1585(-\overset{C}{\overset{\|}{C}}O-)cm^{-1}$

PMR: $\delta^{D_2O}$ 3.07(1H, S) 3.10(2H, S) 3.11(2H, d)
5.18(1H, d) 5.24(1H, d) 5.73-6.17(1H, m)

The agent of the present invention is prepared in a normal form such as a powder or an aqueous or oil dispersion.

<u>Agent Preparation Example</u>

Fifty grams of N-allylglycine potassium salt were dissolved in about 100 mℓ of pure water and concentrated hydrochloric acid was added to the solution to adjust its pH to 7.0. Polyoxyethylene oleyl ether as

a surfactant and triethanolamine lauryl sulfate were added in amounts of 10 g, respectively. Pure water was further added to provide 250 g of an agent containing 20% of N-allylglycine potassium salt. The agent is used after being diluted to 100 to 400 times.

The amount of the plant growth regulation agent used according to the present invention differs depending upon the type of crop, growth stage, application method, and application time. However, the agent of the present invention is generally applied in an amount of 0.03 to 4 kg per ha and preferably in an amount of 0.1 to 2 kg per ha, and in the form of an aqueous solution.

In the case of corn plants, an aqueous solution of the agent of the present invention is applied to the stems and leaves in the early growth stage. In this case, the agent is preferably applied in an amount of 0.03 to 3 kg per ha and more preferably in an amount of 0.1 to 2 kg per ha.

In the case of wheat plants, an aqueous solution of the agent of the present invention is applied to stems and leaves at or close to the blooming period. The agent, in this case, is preferably applied in an amount of 0.03 to 3 kg per ha and more preferably in an amount of 0.1 to 2 kg per ha.

In the case of bean plants, an aqueous solution of the agent of the present invention is applied to stems and leaves at or close to the blooming period. In this case, the agent is preferably used in an amount of 0.05 to 4 kg per ha and more preferably in an amount of 0.1 to 2 kg.

In the case of potato plants, particularly, sweet potato plants, an aqueous solution of the agent of the present invention is applied to stems and leaves within 1 to 2 months after transplantation of seedlings. In the case of white potatoes, an aqueous solution of the agent is applied to stems and leaves at or close to the blooming period. The agent, in either case, is

preferably applied in an amount of 0.05 to 4 kg per ha and more preferably in an amount of 0.1 to 2 kg per ha.

In the case of rice plants, an aqueous solution of the agent of the present invention is applied to stems and leaves at or close to the blooming period. The agent is preferably applied in an amount of 0.03 to 3 kg per ha and more preferably in an amount of 0.1 to 2 kg per ha.

The agent of the present invention can be applied in admixture with a liquid fertilizer, an insecticide, a herbicide, a fungicide or the like. In order to allow easy deposition on and absorption of the agent by a plant, a surfactant can be added to an aqueous solution of the agent before application.

The present invention will now be described in more detail by way of its Test Examples.

Test Example 1

Photosynthesis Test Using Protoplast

In order to demonstrate accelerated photosynthesis by application of a plant growth regulation agent according to the present invention, a test was performed using protoplasts of a wheat plant as a test plant.

Wheat plants (Norin No. 61) were cultured for 10 days using vermiculite as culture soil in a natural light fighttron kept at 25°C during daytime and at 20°C at nighttime. Protoplasts were separated from the wheat plant by a conventional method, and photosynthesis performance of the protoplasts was tested using an oxygen electrode.

The protoplast was irradiated with light at luminances of 40,000 to 100,000 lux in a dissolved carbon dioxide gas (without using $NaHCO_3$), and the photosynthesis performance of the protoplasts was determined in accordance with oxygen emission.

Using 50 mM "Hepe-KOH" (pH 7.0), 0.4 M sorbitol and 1 m "MEDTA" as a reaction solution, the protoplasts and a test compound were incubated for 1 minute, and the

contents were irradiated with light to determine the photosynthesis performance of the protoplasts for comparison with the photosynthesis performance before addition of the test compound. The measurement results are shown in Table III below.

Table III

| Compound No. | Concentration (mM) | 100,000 lux | 40,000 lux |
|---|---|---|---|
| Not treated | - | 100 | 100 |
| 4 | 10<br>20 | 126<br>137.6 | 124.1<br>133.5 |
| 15 | 10 | 108 | - |
| 16 | 10 | 111 | - |
| 17 | 10 | 110 | - |
| 18 | 10 | 112 | - |
| 19 | 10 | 107 | - |
| 20 | 10 | 115 | - |
| 21 | 10 | 110 | - |
| 22 | 1 | 104 | - |
| 24 | 1 | 107 | - |
| 38 | 10 | 116 | - |
| 39 | 10 | 110 | - |
| 40 | 10 | 108 | - |

Test Example 2

Wagner's pots each having a volume of a/5000 were charged with paddy field soil. Rice plant seedlings in the 3.5-leaf stage (Nihonbare) were transplanted in the pots and were cultured outdoors.

100 ppm, 500 ppm and 1,000 ppm aqueous solutions of compound No. 4 containing 200 ppm of polyoxyethylene alkyl allyl ether as a surfactant were applied in

amounts of 10 mℓ per pot on stems and leaves of the plants on August 7. The rice plants were harvested on October 25. The test results are shown in Table IV below.

Table IV

| Concentration (ppm) | Straw Weight | | Unpolished Rice Weight | |
|---|---|---|---|---|
| | g/pot | Ratio | g/pot | Ratio |
| Not treated | 45.4 | 100 | 25.0 | 100 |
| (100) | 46.0 | 101 | 25.5 | 102 |
| (500) | 48.5 | 107 | 30.9 | 123 |
| (1000) | 47.3 | 103 | 26.5 | 106 |

Test Example 3

White potato plants (Waseshiro) were cultured for 2 months until in the blooming period after transplantation in a field. 100 ppm, 600 ppm and 1,000 ppm aqueous solutions of compound No. 3 containing 200 ppm of polyoxyethylene alkyl allyl ether as a surfactant were applied in an amount of 2,000 ℓ per ha of the field. After 1.5 months from application, the potatoes were harvested, and the total weight of the harvested potatoes and the number of potatoes weighing over 20 g was counted. The results are shown in Table V.

Table V

| Compound No.: Application Amount (g/ha) | Weight | | Number of Pieces | |
|---|---|---|---|---|
| | t/ha | ratio | x1000/ha | ratio |
| Non-treatment plot | 25.7 | 100 | 193.0 | 100 |
| 3 (200) | 27.4 | 106 | 223.0 | 116 |
| 3 (600) | 26.9 | 104 | 204.0 | 106 |
| 3 (2000) | 27.6 | 107 | 196.0 | 102 |

Test Example 4

Sweet potatoes (Koganesengan) were grown for 1 month after transplantation in a field. 100 ppm, 300 ppm and 1,000 ppm aqueous solutions of compound No. 3 containing 200 ppm of polyoxyethylene alkyl allyl ether as a surfactant were applied to the field in an amount of 1,000 ℓ per ha. Two months after application, the sweet potatoes were harvested, and the total weight of sweet potatoes weighing over 30 g was measured. The obtained results are shown in Table VI.

Table VI

| Compound No.: Application Amount (g/ha) | ton/ha | Ratio to Non-treatment plot |
|---|---|---|
| Non-treatment plot | 21.0 | 100 |
| 3 (100) | 22.5 | 107 |
| 3 (300) | 23.1 | 110 |
| 3 (1000) | 22.7 | 108 |

Test Example 5

Soybean plants (Kitakomachi) were sown on May 6.

On June 29, 10 days after the blooming period (June 19), the agents were applied. More specifically, 60 g, 200 g, 600 g and 2,000 g of compounds Nos. 4 and 13, respectively, were dissolved in 2,000 ℓ of water, and 200 ppm of polyoxyethylene alkyl allyl ether as

a surfactant was added to each solution obtained. Each solution was uniformly applied to stems and leaves of the plants in an amount of 2,000 ℓ per ha. Thereafter, soybeans were harvested on September 15, and the yield in each test plot was measured. The obtained results are shown in Table VII.

Table VII

| Compound No. | Application Amount (g/ha) | Average Yield of Two Plots | |
|---|---|---|---|
| | | Kg/ha | Ratio to Non-Treatment Plot |
| 4 | 0 | 4020 | 100 |
| | 60 | 4025 | 100 |
| | 200 | 4382 | 109 |
| | 600 | 5266 | 131 |
| | 2000 | 5387 | 134 |
| 13 | 60 | 4021 | 100 |
| | 200 | 4422 | 110 |
| | 600 | 4221 | 105 |

Test Example 6

Winter-sowing wheat plants (Horoshiri-Komugi) were grown to the blooming period (May 21). 30 g, 100 g, 300 g and 1,000 g of compound No. 4 were respectively dissolved in 1,000 ℓ volumes of water, and 200 ppm of polyoxyethylene alkyl allyl ether as a surfactant was added to each resultant solution. Each solution was uniformly applied to stems and leaves of the wheat plants with a sprayer in an amount of 1,000 ℓ per ha.

The wheat crop was harvested on July 25, 1 month after the application. The dry weight of the aboveground portion, and the yield of wheat crop was measured (one-plot three-series test plot).

The measured results are shown in Table VIII.

Table VIII

| Application Amount (g/ha) | Aboveground Portion Dry Weight kg/ha | Ratio to Non-Treatment Plot | Average Wheat kg/ha | Yield of Ratio to Non-Treatment Plot |
|---|---|---|---|---|
| Not treated | 12.650 | 100 | 5480 | 100 |
| 30 | 13.120 | 104 | 5650 | 103 |
| 100 | 13.100 | 103 | 5670 | 103 |
| 300 | 13.580 | 107 | 5990 | 109 |
| 1000 | 16.020 | 127 | 7080 | 129 |

Test Example 7

500 g each of compounds Nos. 4 and 5 were dissolved in 1,000 ℓ volumes of water, and 200 ppm of polyoxyethylene alkyl allyl ether as a surfactant was added to each solution. Each solution was uniformly applied to stems and leaves of winter-sowing wheat plants (Horoshiri-Mugi) 20 before blooming (May 8) and at the blooming period (May 28) in an amount of 1,000 ℓ per ha. The wheat crop was harvested on August 5, and the yield was measured (one-plot two-series test plot).

The measured results are shown in Table IX.

Table IX

| Compound No. | Application Amount (g/ha) | Application Time | Average Yield of Wheat | |
|---|---|---|---|---|
| | | | kg/ha | Ratio to Non-Treatment Plot |
| Not treated | - | - | 6535 | 100 |
| 4 | 500 | 20 days before blooming | 7842 | 120 |
| | 500 | Blooming period | 7319 | 112 |
| 5 | 500 | 20 days before blooming | 7907 | 121 |
| | 500 | Blooming period | 7581 | 116 |
| 18 | 500 | 20 days before blooming | 7973 | 122 |
| | 500 | Blooming period | 7450 | 114 |
| 20 | 500 | 20 days before blooming | 7777 | 119 |
| | 500 | Blooming period | 7319 | 112 |
| 38 | 500 | 20 days before blooming | 7515 | 115 |
| | 500 | Blooming period | 7189 | 110 |

Test Example 8

One seed each of corn plants (Honeybantam) was sown in a plastic pot having a volume of 1,000 mℓ, and culture was performed under natural conditions. Compound No. 4 was dissolved in concentrations shown in Table X, and 200 ppm of polyoxyethylene alkyl allyl ether as a surfactant was added to each solution. Each solution was applied to the corn plants in the 2-leaf stage such that each plant was sufficiently wetted. In 21 days after application, the dry weights of the aboveground and underground portions were measured. The measured results are shown in Table X.

Table X

| Concentration (ppm) | Aboveground Portion | | Underground Portion | |
|---|---|---|---|---|
| | g/pot | Ratio to Non-Treatment Plot | g/pot | Ratio to Non-Treatment Plot |
| Not treated | 3.50 | 100 | 1.82 | 100 |
| 100 | 4.62 | 132 | 1.98 | 109 |
| 300 | 5.04 | 144 | 2.11 | 116 |
| 1000 | 5.57 | 159 | 2.17 | 119 |

Test Example 9

One soybean seed (Yukimusume) each was sown in plastic pots having a volume of 1 ℓ (April 5), and culture was performed in a green house. Each compound shown in Table XI was dissolved in concentrations shown in Table XI, and 200 ppm of polyoxyethylene alkyl allyl ether as a surfactant was added to each solution. Each solution was applied to stems and leaves of the plants in the 2-leaf stage until each plant was sufficiently wetted. 20 days after application (May 22), the dry weights of the aboveground portions were measured. The obtained results are shown in Table XI.

Table XI

| Compound No. | Concentration (ppm) | Ratio to Non-Treatmet Plot (7.53g/plant) |
|---|---|---|
| Not treated | - | 100 |
| No. 5 | 300<br>1000 | 126<br>107 |
| No. 17 | 300<br>1000 | 107<br>117 |
| No. 18 | 300<br>1000 | 110<br>121 |
| No. 19 | 300<br>1000 | 105<br>122 |
| No. 21 | 300<br>1000 | 110<br>119 |
| No. 39 | 300<br>1000 | 103<br>126 |

Test Example 10

Ten seeds each of wheat plants (Shunko) were sown in Wagner's pots each having a volume of a/5000 (July 10), and culture was performed under natural conditions. Each compound in Table XII below was dissolved in concentrations shown therein, and 200 ppm of polyoxyethylene alkyl allyl ether as a surfactant was added to each solution. Each solution was applied to stems and leaves of the plants in the 2-leafstage in an amount of 5 mℓ per pot. 20 days after application (August 12), the dry weight of the aboveground portion was measured. The obtained results are shown in Table XII.

Table XII

| Compound No. | Concentration (ppm) | Ratio to Non-Treatment Plot (1.52g/plant) |
|---|---|---|
| Not treated | - | 100 |
| No. 17 | 300<br>1000 | 114<br>121 |
| No. 20 | 300<br>1000 | 133<br>106 |
| No. 21 | 300<br>1000 | 120<br>107 |
| No. 39 | 300<br>1000 | 117<br>122 |

Claims:

1. A plant growth regulation agent characterized by comprising, as an effective component, at least one compound selected from the group consisting of compounds represented by general formulas:

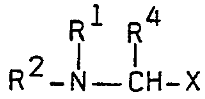

...(A)

and

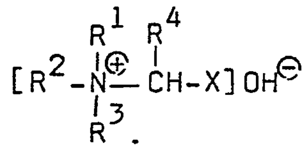

...(B)

(wherein each of $R^1$, $R^2$ and $R^3$ is H, alkyl or alkenyl group containing 1 to 4 carbon atoms or benzyl group; $R^4$ is H, $CH_3$, $C_2H_5$, $CH_2=CH$ or $CH_3CH=CH$; and X is CN, COOH, $COOCH_3$, $COOC_2H_5$ or $CONH_2$; $R^1$, $R^2$ and $R^4$ in general formula (A) not being simultaneously hydrogen atoms) and salts thereof, and $R^1$, $R^2$ and $R^3$ in general formula (B) not being hydrogen atoms.

2. An agent according to claim 1, wherein the compound is N-allylglycine or a salt thereof.

3. An agent according to claim 1, wherein the compound is vinylglycine.

4. An agent according to claim 1, wherein the compound is one member selected from the group consisting of N-allylglycine, N-allylglycine hydrochloride, N-allylglycine sodium salt, N-allylglycine potassium salt, N-allylglycine choline salt, and N-allylglycine ethyl ester.

5. An agent according to claim 1, further consisting of an effective amount of a surfactant.

6. An agent according to claim 1, wherein the plant is a corn plant.

7. An agent according to claim 1, wherein the plant is a bean plant.

8. An agent according to claim 1, wherein the plant is a potato plant.

9. An agent according to claim 1, wherein the plant is a wheat plant.

10. An agent according to claim 1, wherein the plant is a rice plant.

11. A method of increasing an yield and of improving a quality of a crop of a plant by application of a compound according to claim 1 to stems and leaves of the plant.

12. A method of facilitating rooting of a plant by immersing seedlings of the plant in a dilute solution of a compound according to claim 1.

European Patent Office

# EUROPEAN SEARCH REPORT

0181494

Application number

EP 85 11 2750

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | PATENTS ABSTRACTS OF JAPAN, vol. 8, no. 251 (C-252) [1688], 16th November 1984; & JP - A - 59 130 201 (MITSUBISHI GAS KAGAKU K.K.) 26-07-1984<br>--- | 1-12 | A 01 N 37/44 |
| X | PATENTS ABSTRACTS OF JAPAN, vol. 4, no. 69 (C-11) [551], 22nd May 1980, page 155 C 11; & JP - A - 55 36 437 (MITSUBHISHI GAS KAGAKU K.K.) 14-03-1980<br>--- | 1,5-12 | |
| X | CHEMICAL ABSTRACTS, vol. 100, no. 7, 13th February 1984, page 196, no. 46923q, Columbus, Ohio, US; C. CHO et al.: "Search for photorespiration inhibitors; glycine and serine derivatives", & AGRIC. BIOL. CHEM. 1983, 47(11),2685-7<br>* Abstract *<br>--- | 1-12 | TECHNICAL FIELDS SEARCHED (Int. Cl 4)<br>A 01 N |
| X | US-A- 535 076 (E.G. JAWORSKI)<br>* Claims *<br>----- | 1,5-12 | |

The present search report has been drawn up for all claims

| Place of search | Date of completion of the search | Examiner |
|---|---|---|
| THE HAGUE | 29-01-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document